# EUROPÄISCHE PATENTSCHRIFT

(11) **EP 3 736 182 B1**
(45) Veröffentlichungstag und Bekanntmachung des Hinweises auf die Patenterteilung: **29.12.2021**
(21) Anmeldenummer: 20171101.7
(22) Anmeldetag: 23.04.2020
(51) Int. Cl.: B60S 3/04, B08B 7/02

(54) **SERVICESTATION ZUM REINIGEN EINER FAHRZEUGSCHEIBE UND VERFAHREN ZUM BETRIEB DER SERVICESTATION**
SERVICE STATION FOR CLEANING A VEHICLE WINDOW AND METHOD FOR OPERATING THE SERVICE STATION
STATION DE SERVICE DESTINÉE AU NETTOYAGE D'UNE VITRE DE VÉHICULE ET PROCÉDÉ DE FONCTIONNEMENT DE LA STATION DE SERVICE

(30) Priorität: 09.05.2019 DE 102019206747
(43) Veröffentlichungstag der Anmeldung: 11.11.2020
(73) Patentinhaber: Volkswagen Aktiengesellschaft, 38440 Wolfsburg (DE)
(72) Erfinder: Otremba, Maik, 38118 Braunschweig (DE); Schütz, Daniel, 38165 Lehre (DE); Herold, Stephan, 38106 Braunschweig (DE); Toro Ramos, Juan Mauricio, 38102 Braunschweig (DE); Toppel, Kristoph, 30173 Hannover (DE)

(56) Entgegenhaltungen:
- WO-A1-2015/011064
- WO-A1-2015/126585
- CN-A- 108 773 360
- DE-A1-102014 112 123
- US-A1- 2018 215 043

## Beschreibung

Die Erfindung betrifft eine Servicestation zum Reinigen einer Fahrzeugscheibe, insbesondere zum autonomen Reinigen zumindest einer Fahrzeugscheibe unter Verwendung von Ultraschall sowie ein Verfahren zum Betrieb der Servicestation, insbesondere zum Betrieb der Servicestation zum autonomen Reinigen einer Fahrzeugscheibe unter Nutzung von Ultraschall.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich.

Bislang sind solche autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Energieversorgung des Fahrzeugs kümmern.

Bereits heutzutage existieren jedoch verschiedenste Mobilitätskonzepte, insbesondere in urbanen Ballungsräumen. Beim sogenannten Carsharing greift dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann ungenutzte Parkzeit der Fahrzeuge minimiert werden.

Carsharing Konzepte sind auch für andere Fahrzeuge, wie beispielsweise Fahrräder, Roller oder Transporter, bekannt. Ohne auf Personenkraftwagen beschränkt zu sein, wird nachfolgend in stellvertretender Weise lediglich auf Carsharing Bezug genommen. Die Erfindung kann darüber hinaus auch im Rahmen von Ride-Pooling und Ride-Hailing zur Anwendung kommen.

Ferner kann eine autonome Fahrzeugflotte eine Flotte von Privatfahrzeugen bezeichnen, die zeitweise für Fahrdienstleistungen, insbesondere für autonome Fahrdienstleistungen, zur Verfügung gestellt werden. In den vorgenannten Fällen ist unter einem Flottenbetreiber der Anbieter einer Anwendung zu verstehen, wobei die Anwendung zum Verbinden von Nutzern und Anbietern von Fahrdienstleistungen genutzt wird. Unter Umständen kann es sich bei dem Flottenbetreiber um einen Fahrzeughersteller oder Servicepartner eines solchen handeln.

Man unterscheidet insbesondere zwischen zentralen und dezentralen Carsharing-Konzepten. Bei zentralen Carsharing-Konzepten muss die Fahrzeugnutzung stets an festen Stationen begonnen und beendet werden. Es handelt sich somit im Wesentlichen um eine kurzzeitige klassische Fahrzeugvermietung. Bei dezentralen Carsharing-Konzepten kann die Fahrzeugnutzung hingegen an beliebigen Punkten eines Betriebsbereichs des Flottenanbieters begonnen und beendet werden. Insbesondere dezentrale Carsharing-Konzepte haben das Potential, die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich zur Verfügung stehen werden.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, die jeweils notwendigen Servicefahrten durchzuführen. Hierbei besteht jedoch das Risiko einer unzureichenden Wartung oder von Ausfällen der Fahrzeuge. Über die Betriebsfähigkeit der Einzelfahrzeuge hinaus ist es ferner erforderlich, die Funktionalität der Flotte zu erhalten. Insbesondere die dezentralen Carsharing-Konzepte erfordern zu jeder Zeit eine bestimmte Mindestanzahl einsatzbereiter Fahrzeuge. Nur so kann eine ausreichende Verfügbarkeit von Fahrzeugen für die Nutzer sichergestellt werden.

Aus der CN108773360A ist eine Autowäschevorrichtung mit einem Container, einem visuellen System und einer Reinigungsvorrichtung mit vier 6-Achsen Robotern bekannt, wobei das visuelle System und die Reinigungsvorrichtung in einer Reinigungskammer des Containers angeordnet sind und eine automatische Reinigung eines Fahrzeugs im Container ermöglichen sollen.

Der Erfindung liegt daher die Aufgabe zugrunde, die Probleme des Standes der Technik zu überwinden oder zumindest zu verringern und eine Lösung für das Durchführen von Scheibenreinigung an einem Fahrzeug, beispielsweise einem autonomen Flottenfahrzeug, zur Verfügung zu stellen, welche das Erfordernis der Funktionalität der Gesamtflotte berücksichtigt.

Die Aufgabe wird gelöst durch die Gegenstände der unabhängigen Patentansprüche. Bevorzugte Weiterbildungen sind Gegenstand der rückbezogenen Unteransprüche.

Ein erster Aspekt der vorliegenden Erfindung betrifft eine Servicestation für ein Fahrzeug, insbesondere eine zum autonomen Durchführen einer Serviceaktion für ein Fahrzeug, insbesondere für die Fahrzeuge einer autonomen Fahrzeugflotte, ausgebildete Servicestation. Die erfindungsgemäße Servicestation weist hierfür zumindest ein zum autonomen Durchführen einer Scheibenreinigung an dem Fahrzeug ausgebildetes Servicemodul auf. Das Servicemodul ist dabei als Roboter ausgebildet oder weist Robotik auf. Insbesondere weist das Servicemodul einen Roboterarm, bevorzugt einen mehrgelenkigen Roboterarm, auf.

Gemäß der vorliegenden Erfindung ist an dem Roboterarm zumindest ein Werkzeug zur Scheibenreinigung angeordnet. Das zumindest eine Werkzeug weist dabei zumindest einen Ultraschallemitter, zumindest ein Mittel zum Auftragen einer Waschflüssigkeit und zumindest ein Mittel zum Abnehmen einer Waschflüssigkeit auf. Mit anderen Worten handelt es sich bei dem zumindest einen Werkzeug um zumindest ein Werkzeug mit den vorgenannten Funktionalitäten, ebenfalls bevorzugt ist ein Werkzeug für jede der vorgenannten Funktionalitäten vorhanden.

Der zumindest eine Ultraschallemitter des zumindest einen Werkzeugs ist insbesondere dazu ausgebildet, Ultraschall in einem Frequenzbereich oberhalb von 1kHz, bevorzugt oberhalb von 16 kHz, zu emittieren. Besonders bevorzugt ist der Ultraschallemitter dazu ausgebildet, Frequenzen zwischen 20 kHz und 2 MHz, ebenfalls bevorzugt Frequenzen zwischen 200 kHz und 1 MHz, und ferner bevorzugt zwischen 20 kHz und 400 kHz zu emittieren. Der Ultraschallemitter ist besonders bevorzugt dazu ausgebildet, diese Frequenzen in zumindest einer Fahrzeugscheibe anzuregen, besonders bevorzugt in Kontakt mit der zumindest einen Fahrzeugscheibe. Mit anderen Worten, ist der Ultraschallemitter nicht zwangsläufig dazu ausgebildet, diese Frequenzen an ein gasförmiges oder flüssiges Medium abzugeben.

Der Ultraschallemitter weist besonders bevorzugt zumindest ein piezoelektrisches Element auf, das zur Erzeugung hochfrequenter mechanischer Schwingungen durch Anlegen eines hochfrequenten elektromagnetischen Stroms, insbesondere Wechselstrom, ausgebildet ist.

Besonders bevorzugt handelt es sich bei dem zumindest einen piezoelektrischen Element um ein piezokeramisches Element, beispielsweise um ein piezokeramisches Element mit Perowskit-Kristallstruktur, beispielsweise um Blei-Zirkonat-Titanat oder Blei-Magnesium-Niobat. Besonders bevorzugt wurden die vorgenannten keramischen Elemente gesintert und durch Anlegen eines elektrischen Gleichfelds bei simultaner Erhitzung bis nahe der Curie-Temperatur des keramischen Materials remanent polarisiert, um permanente Dipolmomente auszurichten.

Der Ultraschallemitter der erfindungsgemäßen Servicestation hat den vorteilhaften Effekt, dass Verschmutzungen von der Fahrzeugscheibe abgelöst oder angelöst werden, sodass eine klassische Scheibenreinigung mit einem Waschfluid ersetzt oder zumindest unterstützt wird. Durch die weiterhin vorhandenen Werkzeuge, insbesondere das Mittel zum Auftrag eines Waschfluides sowie das Mittel zum Abnehmen des Waschfluides können die abgelösten oder angelösten Verschmutzungen zuverlässig von der Fahrzeugscheibe entfernt werden. Durch die Anordnung der vorgenannten Werkzeugkombination im Servicemodul einer autonomen Servicestation sind Scheibenreinigung vorteilhaft mit hoher Effizienz und Gründlichkeit an einer Vielzahl autonomer Flottenfahrzuge voll- oder teilautonom und in kurzer Zeit durchführbar.

In der erfindungsgemäßen Servicestation ist der Roboterarm dazu ausgebildet ist, den Ultraschallemitter an eine Fahrzeugscheibe des Fahrzeugs anzulegen. Insbesondere weist der Roboterarm zumindest ein Gelenk und zumindest einen mit dem Gelenk verbundenen Aktuator auf, um das, bevorzugt an einem freien Ende des Roboterarms angeordnete Werkzeug gezielt an die Oberfläche einer Fahrzeugscheibe anzulegen. Bevorzugt weist der Roboterarm eine Mehrzahl von Gelenken auf, wobei jedes mit zumindest einem Aktuator verbunden ist. Somit kann der Roboterarm vorteilhaft auch komplexere Bewegungen ausführen beziehungsweise komplexere Geometrien annehmen. Dies ermöglicht beispielsweise die erfindungsgemäße Servicestation vorteilhaft auch zur Scheibenreinigung von der Innenseite der Fahrzeugscheiben einzusetzen. Der Roboterarm ist besonders bevorzugt dazu ausgebildet, durch eine geöffnete Tür oder ein geöffnetes Fenster des Fahrzeugs in den Fahrzeuginnenraum eingeführt zu werden.

Ferner bevorzugt weist der Roboterarm zumindest einen Sensor, beispielsweise einen Abstandsensor und/oder Drucksensor, sowie eine mit dem zumindest einen Sensor verbundene Regelvorrichtung auf. Besonders bevorzugt ist die Regelvorrichtung dazu ausgebildet, basierend auf den Signalen des zumindest einen Sensors, ein Anlegen des Ultraschallemitters an die Fahrzeugscheibe zu steuern, um vorteilhaft Beschädigungen der Scheibe zu verhindern.

In einer bevorzugten Ausführungsform ist der Ultraschallemitter selbst dazu ausgebildet, an die Fahrzeugscheibe angelegt zu werden. Ebenfalls bevorzugt weist das Werkzeug des Servicemoduls zumindest einen Schwingköper auf, der dazu ausgebildet ist, an die Fahrzeugscheibe angelegt zu werden und mit dem Ultraschallemitter in Wirkverbindung steht. Die Wirkverbindung erlaubt es dabei, den Schwingkörper mittels des Ultraschallemitters in Schwingung zu versetzen. Besonders bevorzugt ermöglicht die Wirkverbindung eine einstellbare Ankopplung des Schwingkörpers an den Ultraschallemitter, beispielsweise durch eine einstellbare Vibrationsdämpfung in einem den Ultraschallemitter und den Schwingköper verbindenden Fluid, beispielsweise einem Nichtnewtonsches Fluid, einer Fluidkupplung. Die vorgenannte Ausführungsform ermöglicht vorteilhaft eine zusätzliche Einstellung der Vibrationsfrequenz über die Ankopplung von Schwingkörper und Ultraschallemitter.

Ferner bevorzugt ist der Ultraschallemitter dazu ausgebildet ist, eine Fahrzeugscheibe des Fahrzeugs in Schwingung zu versetzen. Dies erfolgt durch Anlegen des Ultraschallemitters an die Fahrzeugscheibe oder durch Anlegen des Schwingkörpers an die Fahrzeugscheibe und durch Erzeugen von Ultraschallschwingungen durch den Ultraschallemitter. Besonders bevorzugt ist das Material des Schwingkörpers an diesen Einsatzzweck angepasst, um einen beschädigungsfreien Kontakt mit der Fahrzeugscheibe zu gewährleisten. Bevorzugt ist der Schwingkörper aus einem weicheren Material als der Ultraschallemitter, besonders bevorzugt aus einem Material mit geringerer Moshärte als die Fahrzeugscheibe, ausgebildet. Somit wird das Entstehen von Kratzern auf der Fahrzeugscheibe verhindert.

Ebenfalls bevorzugt ist der Schwingkörper an die Ausdehnung einer Fahrzeugscheibe angepasst oder anpassbar, um vorteilhaft eine gleichmäßige Ankopplung an die Fahrzeugscheibe zu gewährleisten. Das erfindungsgemäße Servicemodul ist ferner dazu ausgebildet, die vom Ultraschallemitter und/oder dem Schwingkörper emittierte Ultraschallfrequenz in einem weiten Bereich, bevorzugt in Abhängigkeit von Dicke, Material und/oder flächiger Ausdehnung der Fahrzeugscheibe einzustellen. Ebenfalls Berücksichtigung findet die Anbindung der Fahrzeugscheibe an das Fahrzeug, um vorteilhaft eine Beschädigung der Anbindung durch die Ultraschallschwingungen zu vermeiden.

Ferner bevorzugt ist das Servicemodul, insbesondere der Ultraschallemitter beziehungsweise eine mit diesem verbundene Steuereinheit dazu ausgebildet, bei der Erzeugung des Ultraschalls Unterschiede in der Ausbreitungsgeschwindigkeit und Ausbreitungsrichtung (longitudinal und/oder transversal) im Ultraschallemitter und der Fahrzeugscheibe zu berücksichtigen. Ebenfalls bevorzugt ist der Schwindkörper als Koppelmedium ausgebildet und weist besonders bevorzugt eine entsprechende akustische Impedanz auf. Ebenfalls bevorzugt weist das Servicemodul der erfindungsgemäßen Servicestation, insbesondere das Werkzeug, ein weiteres Mittel zur Abgabe eines Koppelmediums zur vibratorischen Ankopplung von Ultraschallemitter oder Schwingkörper und Fahrzeugscheibe auf. Bevorzugt ist das Werkzeug zur Abgabe eines Koppelmediums integriert im oder ortsnah zum Schwingkörper angeordnet.

In einer ebenso bevorzugten Ausführungsform der erfindungsgemäßen Servicestation weist das an dem Roboterarm angeordnete Werkzeug ein Mittel zum Auftragen einer Waschflüssigkeit auf, das zumindest einen Tank für eine Waschflüssigkeit und zumindest eine Sprühdüse aufweist. Der Tank für die Waschflüssigkeit ist dabei bevorzugt in dem Werkzeug ausgebildet und bevorzugt zur Aufnahme eines wasser- und Tensid-haltigen Reinigungsmittels ausgebildet. Ferner bevorzugt ist der Tank über zumindest eine Zuleitung mit der zumindest einen Sprühdüse verbunden und ist die zumindest eine Sprühdüse dazu ausgebildet, die Waschflüssigkeit auf die Fahrzeugscheibe aufzusprühen. Dabei ist die Sprührichtung der zumindest einen Sprühdüse bevorzugt einstellbar, um ein Besprühen der gesamten Fahrzeugscheibe zu ermöglichen. Ebenfalls bevorzugt ist eine Mehrzahl von Sprühdüsen vorgesehen, um ein gleichmäßiges Besprühen der gesamten Fahrzeugscheibe zu ermöglichen.

Ferner bevorzugt weist das an dem Roboterarm angeordnete Werkzeug ein Mittel zum Abnehmen einer Waschflüssigkeit auf, welches zumindest ein Mittel zum Abziehen und/oder ein Mittel zum Aufnehmen der Waschflüssigkeit aufweist. Das Mittel zum Aufnehmen der Waschflüssigkeit ermöglicht dabei insbesondere ein Aufnehmen der Waschflüssigkeit und der darin gelösten Verschmutzungen. Das Mittel zum Abziehen der Waschflüssigkeit ermöglicht dabei ein Entfernen von verbleibender Waschflüssigkeit von der Fahrzeugscheibe und somit beispielsweise ein Trocknen der Fahrzeugscheibe. Darüber hinaus weist das Werkzeug bevorzugt ferner ein zusätzliches Mittel zum Trocknen und/oder Polieren der Fahrzeugscheibe auf, wobei es sich beispielsweise um ein Mikrofaserelement oder dergleichen handeln kann.

In einer bevorzugten Ausführungsform der erfindungsgemäßen Servicestation ist diese dazu ausgebildet, in einer Serviceinfrastruktur für autonome Flottenfahrzeuge zum Einsatz zu kommen. Besonders bevorzugt weist die erfindungsgemäße Servicestation hierzu ein für die Kommunikation mit den Fahrzeugen und/oder einem Server eines Flottenbetreibers eingerichtetes (zweites) Kommunikationsmodul auf. Das (zweite) Kommunikationsmodul ist beispielsweise ein WLAN- oder Mobilfunk-Modul und ist vorzugsweise zum Durchführen einer Car2Car oder Car2X Kommunikation ausgebildet. Das zweite Kommunikationsmodul ist bevorzugt dafür ausgebildet, entsprechend eines von dem ersten Kommunikationsmodul und/oder von dem Server genutzten Kommunikationsprotokolls zu kommunizieren.

Die erfindungsgemäße Servicestation weist ferner bevorzugt eine zum Ermitteln einer an einem Fahrzeug durchzuführenden Serviceaktion eingerichtete (zweite) Steuereinheit auf. Die (zweite) Steuereinheit ist insbesondere dazu ausgebildet, die Serviceaktion anhand von Informationen zu einem Servicebedarf, insbesondere einem Verschmutzungsgrad zumindest einer Fahrzeugscheibe, des Fahrzeugs zu ermitteln. Das zweite Kommunikationsmodul ist bevorzugt dazu ausgebildet, Informationen zu diesem Servicebedarf, insbesondere zu einem Verschmutzungsgrad zumindest einer Fahrzeugscheibe, von einem Fahrzeug und/oder dem Server zu empfangen. Die (zweite) Steuereinheit ist ferner bevorzugt dazu ausgebildet, den Roboterarm zu steuern, insbesondere die Bewegungen des Roboterarms zu steuern. Die (zweite) Steuereinheit ist insbesondere dazu ausgebildet, den Roboterarm so zu steuern, dass das Werkzeug zur Scheibenreinigung an die Innenseite oder Außenseite einer Fahrzeugscheibe angelegt wird. Besonders bevorzugt ist die (zweite) Steuereinheit dazu ausgebildet, den Roboterarm durch eine geöffnete Tür oder ein geöffnetes Fenster des Fahrzeugs in den Fahrzeuginnenraum einzuführen. Ferner bevorzugt ist die Steuereinheit dazu ausgebildet, das Werkzeug zur Scheibenreinigung, insbesondere die Erzeugung von Ultraschall und/oder das Abgeben einer Waschflüssigkeit oder eines Koppelmediums zu steuern.

In einer besonders bevorzugten Ausführungsform ist die (zweite) Steuereinheit der erfindungsgemäßen Servicestation dafür eingerichtet, eine an dem Fahrzeug durchzuführende Scheibenreinigung anhand vom Fahrzeug oder vom Server empfangener Informationen zu ermitteln. Dabei wird insbesondere die Art der Scheibenreinigung, beispielsweise Außen- oder Innenreinigung, und die zu reinigende zumindest eine Fahrzeugscheibe ermittelt. Gegebenenfalls werden weitere Randbedingungen, beispielsweise zum Vorhandensein von Scheibenwischern oder zur Art der Scheibe und/oder des Fahrzeugs ermittelt, die für die durchzuführende Scheibenreinigung relevant sind. Besonders bevorzugt ist die zweite Steuereinheit dafür eingerichtet ist, die an dem Fahrzeug durchzuführende Scheibenreinigung anhand von Informationen zu ermitteln, die mittels des (zweiten) Kommunikationsmoduls der Servicestation von dem Fahrzeug oder von dem Server empfangen wurden.

In einer ebenfalls bevorzugten Ausführungsform der erfindungsgemäßen Servicestation weist diese zusätzlich ein dem Servicemodul vorgelagertes erstes Kontrollmodul auf. Das erste Kontrollmodul weist dabei zumindest einen ersten Sensor auf, der zum Erfassen zumindest einer einen Reinigungsbedarf einer Fahrzeugscheibe charakterisierenden Größe ausgebildet ist. Mit anderen Worten ist das erste Kontrollmodul dazu ausgebildet (eingerichtet), zumindest einen Reinigungsbedarf der Fahrzeugscheibe zu detektieren. Somit kann vorteilhaft ein zuvor erfasster Reinigungsbedarf beziehungsweise eine daraus ermittelte Scheibenreinigung verifiziert und modifiziert werden. Ebenfalls bevorzugt wurde im erfindungsgemäßen Verfahren vorab lediglich eine Art der Scheibenreinigung bestimmt. In diesem Fall wird anhand von mittels des ersten Kontrollmoduls erfassten Informationen ein Grad der Scheibenreinigung bestimmt.

In einer besonders bevorzugten Ausführungsform ist das erste Kontrollmodul als eine Scanbrücke oder dergleichen ausgebildet. Ebenfalls bevorzugt weist das erste Kontrollmodul zumindest einen Sensor, beispielsweise einen optischen Sensor wie eine Kamera, zum Erfassen einer Verschmutzung der Fahrzeugscheibe auf. Ebenfalls bevorzugt ist der optische Sensor zum Messen eines Reflektionsgrades und/oder Transmissionsgrades der Fahrzeugscheibe ausgebildet, um davon auf eine Verschmutzung der Scheibe zu schließen.

Ferner bevorzugt ist das erste Kontrollmodul zusätzlich zum Erfassen einer Vielzahl von fahrzeugspezifischen Informationen ausgebildet. Das erste Kontrollmodul ist besonders bevorzugt dazu ausgebildet, einen Fahrzeugtyp, eine Fahrzeuggröße, Einstellwerte von verstellbaren Fahrzeugkomponenten (Außenspiegel, Scheibenwischer, etc.) und dergleichen zu erfassen. Die zweite Steuereinheit ist bevorzugt dazu ausgebildet, die Scheibenreinigung anhand der zusätzlich erfassten fahrzeugspezifischen Informationen anzupassen. Beispielsweise kann eine Scheibenreinigung des Fahrzeugs in Abhängigkeit der Fahrzeuggröße angepasst werden oder so durchgeführt werden. Darüber hinaus kann das erste Kontrollmodul weitere Mittel zum Feststellen eines weitergehenden Servicebedarfs aufweisen, wie beispielsweise Mittel zum Auslesen eines Füllstands eines Energiespeichers des Kraftfahrzeugs und/oder Mittel zum Auslesen einer Fehlermeldung des Kraftfahrzeugs.

In einer ebenfalls bevorzugten Ausführungsform der erfindungsgemäßen Servicestation weist diese ferner ein dem Servicemodul nachgelagertes zweites Kontrollmodul auf. Das zweite Kontrollmodul weist dabei zumindest einen zweiten Sensor auf, der zum Erfassen zumindest einer den Reinigungsbedarf einer Fahrzeugscheibe charakterisierenden Größe ausgebildet ist. Mit anderen Worten ist das zweite Kontrollmodul ebenfalls dazu ausgebildet, zumindest einen Reinigungsbedarf einer Fahrzeugscheibe zu detektieren. Diese Detektion dient jedoch insbesondere dazu, die Qualität der zuvor durchgeführten Scheibenreinigung zu evaluieren. Insbesondere kann der mit dem zweiten Kontrollmodul erfasste Ist-Zustand mit einem mit der Scheibenreinigung angestrebten Soll-Zustand verglichen werden. Bevorzugt ist das zweite Kontrollmodul ganz oder teilweise identisch zu dem ersten Kontrollmodul ausgebildet, beispielsweise als Scanbrücke oder dergleichen, wie vorstehend bereits beschrieben.

Ein weiterer Aspekt der Erfindung betrifft ein Verfahren einer Servicestation zur autonomen Reinigung zumindest einer Fahrzeugscheibe eines Fahrzeugs, insbesondere zur Reinigung zumindest einer Fahrzeugscheibe eines in einem Betriebsbereich operierenden autonomen Fahrzeugs. Bevorzugt können die Fahrzeuge innerhalb des Betriebsbereichs von Nutzern für autonome Fahrdienstleistungen genutzt werden, unabhängig davon, ob es sich um Fahrzeuge eines Carsharing-Anbieters oder um private Fahrzeuge handelt. Zumindest in dem Betriebsbereich ist bevorzugt die für einen autonomen Fahrbetrieb der Fahrzeuge notwendige Infrastruktur vorhanden. Der Betriebsbereich weist ferner bevorzugt zumindest eine zur Durchführung einer Scheibenreinigung zumindest einer Fahrzeugscheibe des Fahrzeugs ausgestattete Servicestation auf. Ferner ist zumindest ein Server zur Kommunikation mit dem zumindest einen autonomen Fahrzeug und der zumindest einen Servicestation eingerichtet. Das erfindungsgemäße Verfahren wird bevorzugt in einem derartigen Betriebsbereich realisiert.

In einem ersten Schritt des erfindungsgemäßen Verfahrens werden Informationen zu einem Verschmutzungsgrad zumindest einer Fahrzeugscheibe des Fahrzeugs von einem Server empfangen. Bei dem Server handelt es sich bevorzugt um den Server eines Flottenbetreibers einer Flotte von in dem Betriebsbereich autonom operierenden Fahrzeugen. Die empfangene Informationen zu einem Verschmutzungsgrad zumindest einer Fahrzeugscheibe des Fahrzeugs ist bevorzugt eine Information zu einer Zustandseigenschaft der Fahrzeugscheibe, die angibt, dass und inwiefern ein Ist-Zustand der Verschmutzung der Fahrzeugscheibe von einem Soll-Zustand desselben abweicht. Dabei gilt der Soll-Zustand für alle Fahrzeuge oder ist individuell für ein bestimmtes Fahrzeug, beispielsweise von dessen Nutzer oder Inhaber, festgelegt.

In einem nächsten Schritt des erfindungsgemäßen Verfahrens wird eine an dem Fahrzeug durchzuführende Scheibenreinigung anhand der Informationen zum Verschmutzungsgrad der zumindest einer Fahrzeugscheibe des Fahrzeugs ermittelt. Eine Reinigung beschreibt dabei in allgemeinster Form eine Einwirkung auf die zumindest eine Fahrzeugscheibe des Fahrzeugs, um dieses von dem vorliegenden Ist-Zustand der Verschmutzung in einen gewünschten Soll-Zustand zu überführen. Besonders bevorzugt wird eine Art der Scheibenreinigung dabei anhand der Art des ermittelten Verschmutzungsgrads ermittelt. Ferner bevorzugt wird ein Grad der Scheibenreinigung anhand des Verschmutzungsgrads ermittelt. Beispielsweise wird anhand des Verschmutzungsgrads ermittelt, ob eine Außen- oder Innenreinigung durchgeführt wird.

Im erfindungsgemäßen Verfahren wird ferner bevorzugt zumindest ein zum Durchführen der ermittelten Reinigung verfügbares Servicemodul der Servicestation ermittelt. Dabei ist ein Servicemodul eine funktionelle Baugruppe der Servicestation, die zum Durchführen einer Scheibenreinigung zumindest einer Fahrzeugscheibe des Fahrzeugs ausgebildet ist. Bevorzugt weist die Servicestation eine Mehrzahl solcher Servicemodule auf. Das verfügbare Servicemodul wird bevorzugt anhand von Informationen zur Belegung oder Auslastung der Servicemodule, die in der Servicestation vorliegen, ausgewählt. Das verfügbare Servicemodul ist bevorzugt dazu ausgebildet, die Scheibenreinigung voll- oder teilautonom durchzuführen. Autonome Durchführung bezeichnet dabei die Durchführung ohne menschliches Zutun.

Im erfindungsgemäßen Verfahren erfolgt schließlich die teil- oder vollautonome Scheibenreinigung zumindest einer Fahrzeugscheibe des Fahrzeugs in der Servicestation. Die Reinigung erfolgt bevorzugt, sobald ein Fahrzeug an der Servicestation eintrifft. Das Eintreffen des Fahrzeugs wird dabei insbesondere mittels einer Sensorik und/oder eines Kommunikationsmoduls der Servicestation erkannt beziehungsweise erfasst. Die Scheibenreinigung erfolgt bevorzugt mit dem zumindest einen zum Durchführen der Reinigung verfügbaren Servicemodul. Das Servicemodul ist wie vorstehend beschrieben ausgebildet, arbeitet teil- oder vollautonom und benötigt keine oder minimale Einwirkung eines Nutzers. Bevorzugt erfolgt die Reinigung mittels des zumindest einen Servicemoduls vollautonom.

Das Durchführen der Scheibenreinigung im erfindungsgemäßen Verfahren zur Scheibenreinigung weist dabei insbesondere die folgenden Verfahrensschritte auf. Zunächst wird ein Ultraschallemitter eines Werkzeugs zur Scheibenreinigung an die Fahrzeugscheibe angekoppelt. Dies erfolgt bevorzugt durch Anlegen des Ultraschallemitters an die Fahrzeugscheibe oder durch Anlegen eines Schwingkörpers an die Fahrzeugscheibe, jeweils entweder direkt oder mittelbar über ein aufgebrachtes Koppelmedium. Durch das Ankoppeln des Ultraschallemitters, durch Erzeugen von Ultraschallschwingungen mittels des Ultraschallemitters und durch Übertragen dieser Ultraschallschwingungen auf die Fahrzeugscheibe wird die Fahrzeugscheibe schließlich in Schwingung versetzt.

Das Durchführen der Scheibenreinigung im erfindungsgemäßen Verfahren weist dann ferner das Reinigen der schwingenden Fahrzeugscheibe mit einer Waschflüssigkeit auf. Dabei erfolgt insbesondere das Aufbringen der Waschflüssigkeit mittels des zumindest einen Mittels zum Auftragen der Waschflüssigkeit. Ferner erfolgt ein Abnehmen der Waschflüssigkeit mit den darin gelösten Verschmutzungen durch das zumindest eine Mittel zum Abnehmen der Waschflüssigkeit. Gegebenenfalls erfolgt ferner eine Trocknung und/oder Politur der Fahrzeugscheibe mit einem Mittel zum Trocknen und/oder Polieren der Fahrzeugscheibe.

Das erfindungsgemäße Verfahren ermöglicht vorteilhaft eine automatische Reinigung zumindest einer Fahrzeugscheibe eines autonomen Fahrzeugs, idealerweise ohne jegliche Einwirkung eines Nutzers. Somit werden stets ein sauberes Erscheinungsbild der Fahrzeuge gewährleistet und mit Verschmutzungen zusammenhängende Gefahren (Unfälle) minimiert. Im Hinblick auf Carsharing-Anbieter bleibt durch das autonome und bedarfsgerechte Reinigen der Fahrzeugscheiben auch die kommerzielle Einsatzfähigkeit erhalten. Indem alle Schritte des erfindungsgemäßen Verfahrens vollautomatisch durchgeführt werden können, werden ferner ein Personalaufwand und die damit verbundene Kosten vorteilhaft reduziert.

In einer bevorzugten Durchführungsform des erfindungsgemäßen Verfahrens weisen die Informationen zu dem Verschmutzungsgrad der zumindest einen Fahrzeugscheibe von dem Fahrzeug selbst erfasste erste Informationen auf. Das Fahrzeug weist hierfür bevorzugt zumindest einen zum Erfassen von Fahrzeugdaten ausgebildeten zweiten Sensor auf. Bei dem Sensor handelt es sich bevorzugt um eine Kamera zum Erfassen eines Verschmutzungsgrads einer Fahrzeugscheibe. Ebenfalls bevorzugt handelt es sich um Sensoren zum Erfassen eines Reflektionsgrades zumindest einer Fahrzeugscheibe. Die ersten Informationen werden vom Fahrzeug an den Server übermittelt, dort verarbeitet und an die Servicestation weitergeleitet.

Alternativ oder zusätzlich weisen die Informationen zu dem Verschmutzungsgrad der zumindest einen Fahrzeugscheibe des Fahrzeugs auf einer Nutzereingabe basierende zweite Informationen auf. Die zweiten Informationen, sprich die Nutzereingabe, sind dabei besonders bevorzugt über eine Fahrzeugschnittstelle und/oder ein mobiles Endgerät erfasst worden. In einer Durchführungsform charakterisieren die zweiten Informationen den Grad der Verschmutzung, beispielsweise anhand einer vorgegebenen Skala, und/oder spezifizieren die Art und/oder den Ort der Verschmutzung, beispielsweise auf der Scheibeninnen- oder Scheibenaußenseite. Ebenfalls bevorzugt enthalten die zweiten Informationen vom Nutzer aufgenommene Bildinformationen, beispielsweise mit dem Smartphone aufgenommene Bilder zumindest einer Fahrzeugscheibe. Die Nutzereingabe erfolgt ferner bevorzugt in Reaktion auf eine an den Nutzer ausgegebene entsprechende Eingabeaufforderung. Die zweiten Informationen werden vom Fahrzeug oder dem Smartphone des Nutzers an den Server übermittelt, dort gegebenenfalls verarbeitet und an die Servicestation weitergeleitet.

Alternativ oder zusätzlich weisen die Informationen zu dem Verschmutzungsgrad der zumindest einen Fahrzeugscheibe von dem Server bereitgestellte dritte Informationen auf, wobei es sich bevorzugt um fahrerunspezifische sowie fahrzeugunspezifische Informationen handelt. Die dritten Informationen charakterisieren bevorzugt Rahmenbedingungen, die eine spezielle Verschmutzung mit einer bestimmten Wahrscheinlichkeit bewirken können. Beispielsweise enthalten die dritten Informationen Daten zum Wetter, zu jahreszeitlich bedingtem Pollenflug oder dergleichen. Die dritten Informationen werden von dem Server an die Servicestation übermittelt.

Ebenfalls bevorzugt erfolgt im erfindungsgemäßen Verfahren das Erfassen von ersten Kontrollinformationen mittels des ersten Kontrollmoduls, besonders bevorzugt mittels des zumindest einen Sensors des ersten Kontrollmoduls. Dies erfolgt bevorzugt nach dem Eintreffen des Fahrzeugs an der erfindungsgemäßen Servicestation. Vorteilhaft kann mittels der ersten Sensoren ein Grad der Verschmutzung der Fahrzeugscheiben eines Fahrzeugs mit hoher Genauigkeit festgestellt werden, beispielsweise wenn eine Servicestation wesentlich besser ausgestattete Sensoren aufweist als das Fahrzeug selbst oder ein Smartphone.

Gemäß dieser bevorzugten Durchführungsform erfolgt bevorzugt ein Ermitteln der am Fahrzeug durchzuführenden Scheibenreinigung anhand der Informationen zum Verschmutzungsgrad der Fahrzeugscheibe und anhand der ersten Kontrollinformationen zum Verschmutzungsgrad der Fahrzeugscheibe. Mit anderen Worten werden die ersten Kontrollinformationen zusätzlich zu den zuvor genannten ersten bis dritten Informationen berücksichtigt, um die Reinigung an die tatsächliche Verschmutzung anzupassen. Somit kann vorteilhaft eine anhand der ersten bis dritten Informationen ermittelte Reinigung verifiziert, modifiziert und/oder adaptiert werden.

Der Empfang der vorgenannten ersten bis dritten Informationen ermöglicht vorteilhaft das Ermitteln einer geeigneten Reinigungsprozedur bereits vor dem Eintreffen des Fahrzeugs in der Servicestation. Insbesondere wird eine vielseitige Datenbasis geschaffen, die verschiedene Datenquellen berücksichtigt und somit robust gegen den Wegfall einzelner Informationen ist. Ferner vorteilhaft wird eine an der Servicestation selbst vorhandene, spezialisierte Sensorik zum Erfassen der ersten Kontrollinformationen genutzt. Somit kann beispielsweise eine vorläufig bestimmte Reinigung nach Ankunft des Fahrzeugs weiter modifiziert werden.

In einer besonders bevorzugten Durchführungsform des erfindungsgemäßen Verfahrens erfolgt ferner ein Erfassen von zweiten Kontrollinformationen zu einem Verschmutzungsgrad zumindest einer Fahrzeugscheibe des Fahrzeugs mittels des zweiten Kontrollmoduls der Servicestation. Ferner bevorzugt erfolgt im erfindungsgemäßen Verfahren ferner das Ermitteln eines Effektivitätsmaßes der durchgeführten Reinigung anhand der zweiten Kontrollinformationen. Mit anderen Worten wird anhand der zweiten Kontrollinformationen vorteilhaft eine Qualität oder ein Effektivitätsmaß der vorab durchgeführten Reinigung bestimmt.

Besonders bevorzugt wird ein mit den zweiten Kontrollinformationen abgebildeter Ist-Zustand einer Verschmutzung zumindest einer Fahrzeugscheibe des Fahrzeugs mit einem Ist-Zustand einer Verschmutzung vor der Scheibenreinigung, wie beispielsweise anhand der ersten bis dritten Informationen und ersten Kontrollinformationen abgebildet, verglichen. Alternativ wird ein mit den zweiten Kontrollinformationen abgebildeter Ist-Zustand einer Verschmutzung zumindest einer Fahrzeugscheibe des Fahrzeugs mit einem in der ermittelten und durchgeführten Scheibenreinigung angestrebten Soll-Zustand der Reinheit der zumindest einen Fahrzeugscheibe des Fahrzeugs verglichen. Anhand eines der vorgenannten Vergleiche wird bevorzugt ein Effektivitätsmaß der durchgeführten Scheibenreinigung ermittelt, beispielsweise als Verhältnis des Verschmutzungsgrads gemäß der ersten bis dritten Informationen (und gegebenenfalls der ersten Kontrollinformationen) und des Verschmutzungsgrads gemäß der zweiten Kontrollinformationen. Anhand des bestimmten Effektivitätsmaßes ist die Qualität der durchgeführten Reinigung vorteilhaft quantisierbar und kann somit besser evaluiert werden.

Besonders bevorzugt wird das Effektivitätsmaß mit einem vorbestimmten Grenzwert, sprich einem vorbestimmten Grenzwert für das Effektivitätsmaß, verglichen. Ist das Effektivitätsmaß gleich oder größer als der vorbestimmte Grenzwert, gilt die autonome Scheibenreinigung der zumindest einen Fahrzeugscheibe als erfolgreich abgeschlossen. Ist das Effektivitätsmaß jedoch geringer als der vorbestimmte Grenzwert, erfolgt bevorzugt ein erneutes Durchführen der Scheibenreinigung mittels derselben oder anderer Servicemodule der Servicestation. Alternativ oder zusätzlich erfolgt die Ausgabe einer Fehlermeldung, beispielsweise wenn nach dem erneuten Durchführen der Scheibenreinigung, zweite Kontrollinformationen erfasst wurden, die zu einem zu geringen Effektivitätsmaß korrespondieren.

Die erfindungsgemäße Servicestation ist bevorzugt Teil einer Infrastruktur zum autonomen Reinigen eines Fahrzeugs, wie im Folgenden in größerem Detail beschrieben. Das erfindungsgemäße Verfahren, insbesondere die Reinigung zumindest einer Fahrzeugscheibe, erfolgt dabei bevorzugt innerhalb der Servicestation durch das Servicemodul. Die erfindungsgemäße Servicestation ist bevorzugt Teil einer Service-Infrastruktur, die zumindest eine Servicestation und bevorzugt eine Vielzahl von in der Servicestation angeordneten oder mit diesen assoziierten Servicemodulen aufweist, welche in einem Betriebsgebiet der autonomen Fahrzeugflotte angeordnet sind. Die Anzahl und Dichte der Servicestationen und Servicemodule ist dabei bevorzugt an die Anzahl der autonomen Flottenfahrzeuge sowie an den Bedarf von Serviceaktionen beziehungsweise die Frequenz benötigter Serviceaktionen angepasst. Jede Servicestation ist bevorzugt zur Kommunikation mit autonomen Fahrzeugen, den Servicemodulen, einem Server und/oder anderen Servicestationen ausgebildet.

Im Rahmen dieser Service-Infrastruktur erfolgt bevorzugt das Ermitteln der verfügbaren (und geeigneten) Servicemodule durch eine Servicestation, an die von einem Fahrzeug oder dem Server Informationen zu einem Servicebedarf eines Fahrzeugs übermittelt wurden. Dabei berücksichtigt die Servicestation ferner die Auslastung der Servicemodule. Das Ermitteln der Eignung erfolgt dabei bevorzugt automatisch, beispielsweise datenbankbasiert, mittels zumindest eines Look-Up-Tables, LUT, mittels zumindest eines Algorithmus und/oder mittels einer künstlichen Intelligenz. Alternativ oder zusätzlich bevorzugt erfolgt das Ermitteln des zumindest einen geeigneten Servicemoduls teilweise durch eine Nutzereingabe, beispielsweise eines Mitarbeiters des Flottenbetreibers in Reaktion auf eine Eingabeaufforderung.

In Rahmen der Service-Infrastruktur erfolgt ferner bevorzugt eine autonome Fahrt des Fahrzeugs zu dem ermittelten verfügbaren (und geeigneten) Servicemodul. Die Fahrt erfolgt dabei nachdem das verfügbare (und geeignete) Servicemodul ermittelt wurde. Sofern das betreffende autonome Fahrzeug in dem verfügbaren und geeigneten Servicemodul beziehungsweise der entsprechenden Servicestation eintrifft, erfolgt ferner die Durchführung einer ermittelten und dem Servicebedarf entsprechenden Serviceaktion teil- oder vollautonom.

Im Rahmen der vorliegenden Anmeldung wird unter einem Servicebedarf des Fahrzeugs bevorzugt verstanden, dass ein Verschmutzungsgrad zumindest einer Fahrzeugscheibe des Fahrzeugs einen vorbestimmten Grenzwert überschreitet. Infolge dieses Servicebedarfs sucht das Fahrzeug bevorzugt die erfindungsgemäße Servicestation auf, wo das erfindungsgemäße Verfahren zur Reinigung einer Fahrzeugscheibe voll- oder teilautonom durchgeführt wird.

Darüber hinaus kann ein Servicebedarf des Fahrzeugs im Rahmen der vorliegenden Anmeldung einen niedrigen Füllstand des Energiespeichers des Fahrzeugs, also beispielsweise ein niedriger *State of Charge*, SOC, eines elektrischen Energiespeichers oder ein niedriger Füllstand eines Tanks für fossile Kraftstoffe oder Wasserstoff betreffen. Ebenfalls bevorzugt kann ein Servicebedarf eine Fehlermeldung des Fahrzeugs betreffen, besonders bevorzugt eine OBD2 Fehlermeldung. Ferner bevorzugt kann der Servicebedarf eine Mitteilung zum Ablauf eines Serviceintervalls, beispielsweise für einen Ölwechsel, betreffen. Ebenfalls bevorzugt kann der Servicebedarf weiteren Reinigungsbedarf des Fahrzeugs betreffen.

Im erfindungsgemäßen Verfahren ist eine Serviceaktion eine Einwirkung auf das Fahrzeug, um dieses oder diesen von dem vorliegenden Ist-Zustand in einen gewünschten Soll-Zustand zu überführen. Bevorzugt wird eine Art der Serviceaktion dabei anhand der Art des ermittelten Servicebedarfs ermittelt, sodass unter einer Serviceaktion eine zu einem bestimmten Servicebedarf korrespondierende Einwirkung auf das Fahrzeug verstanden wird. Zu einer Verschmutzung des Fahrzeugs korrespondiert dabei beispielsweise eine Reinigung des Fahrzeugs. Insbesondere korrespondiert zu einer Verschmutzung zumindest einer Fahrzeugscheibe das Durchführen des erfindungsgemäßen Verfahrens zur Scheibenreinigung. Ferner bevorzugt korrespondiert zu einem niedrigen Füllstand des Energiespeichers ein Auffüllen des Energiespeichers und zu einer detektierten Fehlermeldung des Fahrzeugs eine Wartung oder eine Reparatur des Fahrzeugs.

Die Verfahrensschritte des erfindungsgemäßen Verfahrens können durch elektrische oder elektronische Bauteile oder Komponenten (Hardware), durch Firmware (ASIC) implementiert sein oder durch Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul sowie ein oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem zuvor beschriebenen erfindungsgemäßen Verfahren abzuweichen.

Das erfindungsgemäße Verfahren erfolgt bevorzugt in einem System zum Durchführen einer Serviceaktion an einem Fahrzeug. Das System zum Durchführen einer Serviceaktion weist zumindest ein autonom fahrendes Fahrzeug auf, welches zumindest einen zum Erfassen von Umgebungsdaten ausgebildeten ersten Sensor und zumindest einen zum Erfassen von Fahrzeugdaten ausgebildeten zweiten Sensor aufweist. Der zumindest eine erste Sensor erlaubt dabei ein Erfassen von Umgebungs- beziehungsweise Umweltinformationen und der zumindest eine zweite Sensor erlaubt ein Erfassen von fahrzeugeigenen Informationen. Das Fahrzeug weist ferner ein zum Durchführen autonomer Fahrmanöver ausgebildetes Fahrsystem auf, das bevorzugt zur vollständigen Quer- und Längsführung des Fahrzeugs ausgebildet ist.

Ferner weist das Fahrzeug ein zum Herstellen zumindest einer Kommunikationsverbindung eingerichtetes (erstes) Kommunikationsmodul auf. Das Kommunikationsmodul ist bevorzugt ein WLAN- oder Mobilfunk-Modul und ist vorzugsweise zum Durchführen einer Car2Car oder Car2X Kommunikation ausgebildet. Ferner weist das Fahrzeug einen Energiespeicher, beispielsweise ein Batteriesystem, und/oder einen Kraftstoff- oder Wasserstofftank auf. Das Fahrzeug weist ferner eine Steuereinheit zum Durchführen von Verfahrensschritten auf.

Das System weist ferner zumindest eine erfindungsgemäße Servicestation wie vorstehend beschrieben auf. Das System weist ferner eine Mehrzahl zum autonomen Durchführen einer Serviceaktion, insbesondere Scheibenreinigung, an dem Fahrzeug ausgebildeter Servicemodule auf. Die Servicemodule sind dabei in der Servicestation angeordnet, beispielsweise in verschiedenen Bereichen eines Gebäudes, oder sind mit der Servicestation assoziiert, beispielsweise in verschiedenen Abschnitten eines Geländes. Jedes Servicemodul weist dabei ein drittes Kommunikationsmodul auf. Das dritte Kommunikationsmodul ist bevorzugt ein WLAN- oder Mobilfunk-Modul und ist vorzugsweise zum Durchführen einer Car2Car oder Car2X Kommunikation ausgebildet. Ferner weist jedes Servicemodul eine dritte Steuereinheit auf, die zum Durchführen der Verfahrensschritte des Servicemoduls im erfindungsgemäßen Verfahren ausgebildet ist. Ferner weist jedes Servicemodul ein oder mehrere Mittel zum Durchführen einer Serviceaktion, insbesondere Scheibenreinigung, auf.

Besonders bevorzugt weist das zumindest eine Servicemodul zumindest ein zum Durchführen einer Scheibenreinigung des Fahrzeugs ausgebildetes erstes Servicemodul auf. Bei dem ersten Servicemodul handelt es sich bevorzugt um einen Roboterarm, an dem ein Werkzeug zur Scheibenreinigung angeordnet ist, das einen Ultraschallemitter, zumindest ein Mittel zum Auftragen einer Waschflüssigkeit und zumindest ein Mittel zum Abnehmen einer Waschflüssigkeit aufweist. Bevorzugt trägt der Reinigungsroboter darüber hinaus zur Innenraumreinigung des Fahrzeugs geeignete und ausgebildete weitere Werkzeuge. Der Roboterarm ist bevorzugt dazu ausgebildet, durch eine geöffnete Tür oder ein geöffnetes Fenster des Fahrzeugs in den Fahrzeuginnenraum eingeführt zu werden. Bei den weiteren Werkzeugen handelt es sich beispielsweise um eine Staubsaugerdüse, eine Polsterbürste, einen Applikator zum Auftrag von Reinigungsmittel und/oder Mittel zur Ablagenreinigung.

Ebenfalls bevorzugt weist das zumindest eine Servicemodul zumindest ein zum Durchführen einer Außenreinigung des Fahrzeugs ausgebildetes zweites Servicemodul auf. Das zweite Servicemodul ist bevorzugt wie eine aus dem Stand der Technik bekannte automatische Waschstraße ausgebildet und weist bevorzugt Düsen zum Auftrag von zumindest einer Reinigungsflüssigkeit, Bürsten oder Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten und/oder Mittel zum Wachsauftrag, auf. Ebenfalls bevorzugt weist das zweite Servicemodul Mittel zum Transport des Fahrzeugs im Modul auf.

Ebenfalls bevorzugt weist die Servicestation alternativ oder zusätzlich zumindest ein zum Befüllen des Energiespeichers des Fahrzeugs ausgebildetes drittes Servicemodul auf. Das dritte Servicemodul weist dabei insbesondere einen eigenen Energiespeicher, beispielsweise eine Batterie oder einen Kraftstofftank, oder einen Anschluss an ein entsprechendes Versorgungsnetz, beispielsweise an ein Stromnetz oder an eine Kraftstoffzuleitung, auf. Ferner weist das dritte Servicemodul ein Anschlussmodul zum Anschluss an ein Nachfüllelement des Fahrzeugs auf. Das Nachfüllelement des Fahrzeugs ist dabei beispielsweise ein Tankstutzen oder eine Ladebuchse. Ferner weist das Anschlussmodul bevorzugt einen Roboterarm auf, der ein an das Nachfüllelement des Fahrzeugs angepasstes Befüllelement aufweist. Das Befüllelement ist vorteilhaft über eine Zuleitung mit dem Energiespeicher verbunden. Besonders bevorzugt ist das dritte Servicemodul für Hybridfahrzeuge ausgebildet und weist beispielsweise ein mit dem Stromnetz verbundenes erstes Befüllelement zum Anschluss an eine Ladebuchse des Fahrzeugs und ein mit einer Kraftstoffzuleitung verbundenes zweites Befüllelement zum Anschluss an einen Tankstutzen des Fahrzeugs auf.

Ferner bevorzugt weist die Servicestation des Systems zum Durchführen einer Serviceaktion ein zum Wechseln der Reifen des Fahrzeugs ausgebildetes viertes Servicemodul auf. Das vierte Servicemodul weist dabei ein Lager für eine Vielzahl von Ersatzrädern und ein automatisches Regalsystem oder dergleichen zur automatischen Entnahme eines Satzes von Ersatzrädern aus dem Lager auf. Ferner bevorzugt weist das vierte Servicemodul einen Roboterarm zum automatischen Wechseln der Reifen des Fahrzeugs mit den Ersatzrädern auf.

Das System weist ferner bevorzugt zumindest einen, zur Kommunikation mit dem zumindest einen autonomen Fahrzeug und zumindest einer Servicestation eingerichteten Server auf. Bei dem Server handelt es sich bevorzugt um einen Server eines Rechenzentrums eines Anbieters von Carsharing-Dienstleistungen (Flottenbetreiber), eines Anbieters von Reinigungsdiensten oder eines Fahrzeugherstellers. Der Server weist insbesondere ein (viertes) Kommunikationsmodul auf, das als WLAN- oder Mobilfunk-Modul und vorzugsweise zum Durchführen einer Car2Car oder Car2X Kommunikation ausgebildet ist. Der Server ist ferner zum Vermitteln einer Kommunikation zwischen dem Fahrzeug und der Servicestation ausgebildet. Mit anderen Worten ist der Server dazu ausgebildet, von der Servicestation oder dem Fahrzeug empfangene Daten an das Fahrzeug oder die Servicestation weiterzuleiten.

Ebenfalls bevorzugt ist der Server dazu ausgebildet, eine Auslastung einer autonomen Fahrzeugflotte zu ermitteln. Hierbei ist das mit Bezug zum erfindungsgemäßen Verfahren beschriebene Fahrzeug ein Teil der autonomen Fahrzeugflotte. Der Server ist zur Kommunikation mit den autonomen Fahrzeugen eingerichtet. Gemäß einer bevorzugten Durchführungsform erfolgt eine Bestimmung einer Auslastung der autonomen Fahrzeugflotte durch den Server und basierend auf von den Fahrzeugen generierten Auslastungsdaten. Die Auslastungsdaten können dabei die Anzahl von Nutzeranfragen, durchschnittliche Fahrzeiten und Fahrtlängen berücksichtigen. Ebenso können zusätzliche Informationen berücksichtigt werden, die eine hohe Nachfrage wahrscheinlich machen, wie Beginn und Ende eines Großereignisses, wie beispielsweise ein Sportereignis, ein Konzert, etc.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Servicestation gemäß einer Ausführungsform;
- Figur 2: eine schematische Darstellung eines Roboterarms der Servicestation gemäß einer Ausführungsform;
- Figur 3: (A) ein Blockschaltbild und (B) eine schematische Darstellung eines Werkzeugs zur Scheibenreinigung gemäß einer Ausführungsform;
- Figur 4: eine schematische Darstellung eines Systems zur Durchführung der erfindungsgemäßen Verfahren, aufweisend ein autonomes Fahrzeug, eine Servicestationen mit Servicemodul und einen Server; und
- Figur 5: eine schematische Darstellung eines Betriebsbereichs zur Durchführung der erfindungsgemäßen Verfahren.

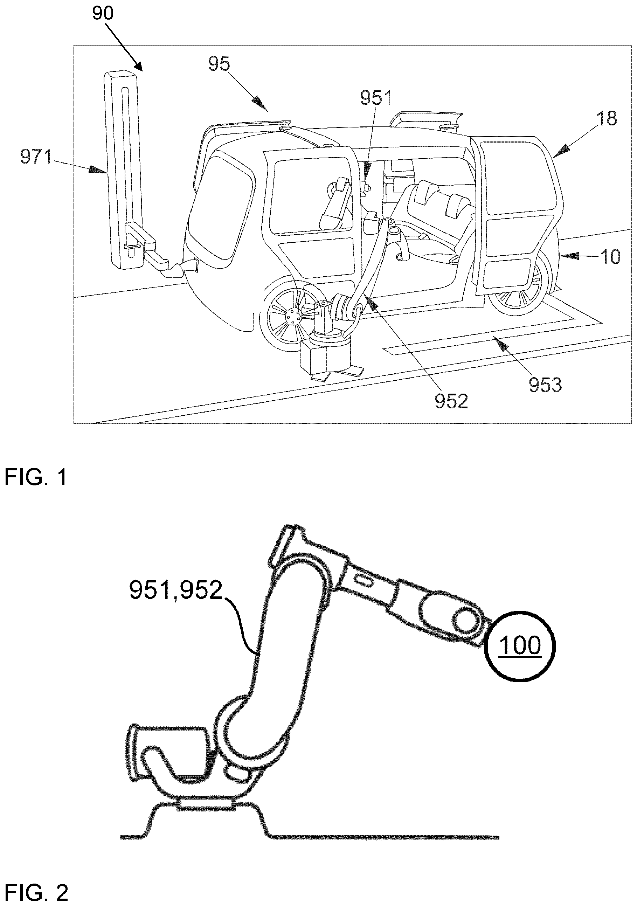

Figur 1 zeigt eine schematische Darstellung einer erfindungsgemäßen Servicestation, insbesondere eines ersten Servicemoduls 95 zur Scheibenreinigung zumindest einer Fahrzeugscheibe des Fahrzeugs 10. Um eine Scheibenreinigung an dem Fahrzeug 10 durchzuführen, fährt dieses in das Servicemodul 95 ein, um dort auf einer Halteposition 953 zum Stehen zu kommen. Sobald das Fahrzeug 10 auf der Halteposition 953 zum Stehen kommt, öffnen sich die Fahrzeugtüren 18 des Fahrzeugs 10 selbsttätig. Dies ist bevorzugt durch die Steuereinheit 92 des ersten Servicemoduls 95 veranlasst, die direkt mit der Steuereinheit 40 des Fahrzeugs 10 kommuniziert. Sobald die Fahrzeugtüren 18 geöffnet sind, werden ein erster Roboterarm 951 und ein zweiter Roboterarm 952 in das Fahrzeug 10 eingeführt.

Figur 2 zeigt eine schematische Darstellung eines solchen Roboterarms 951, 952 mit einem daran angeordneten Werkzeug 100 zur Scheibenreinigung. Der Roboterarm 951, 952 weist ferner mehrere Gelenke sowie mehrere mit den Gelenken verbundene Aktuatoren auf. Somit ist der Roboterarm 951, 952 dazu in der Lage, auch komplexe Geometrien anzunehmen. Insbesondere kann der Roboterarm durch ein geöffnetes Fahrzeugfenster oder eine geöffnete Fahrzeugtür in das Fahrzeuginnere eindringen und somit das Werkzeug auch an die Innenseiten der Fahrzeugscheiben anlegen. Darüber hinaus ist der Fahrzeugarm dazu ausgebildet, das Werkzeug zur Scheibenreinigung von außen an die Scheiben anzulegen.

Darüber hinaus können an den Roboterarmen 951, 952 weitere Werkzeuge zum Durchführen einer Innenraumreinigung angeordnet sein, wie beispielsweise eine (nicht dargestellte) Staubsaugerdüse, ein Applikator zum Auftrag eines Reinigungsmittels und Mittel zur Polsterreinigung. Das in Figur 1 gezeigte erste Servicemodul 95 weist zudem einen Ladeanschluss 971 zum Auffüllen des elektrischen Energiespeichers 36 des Fahrzeugs 10 auf.

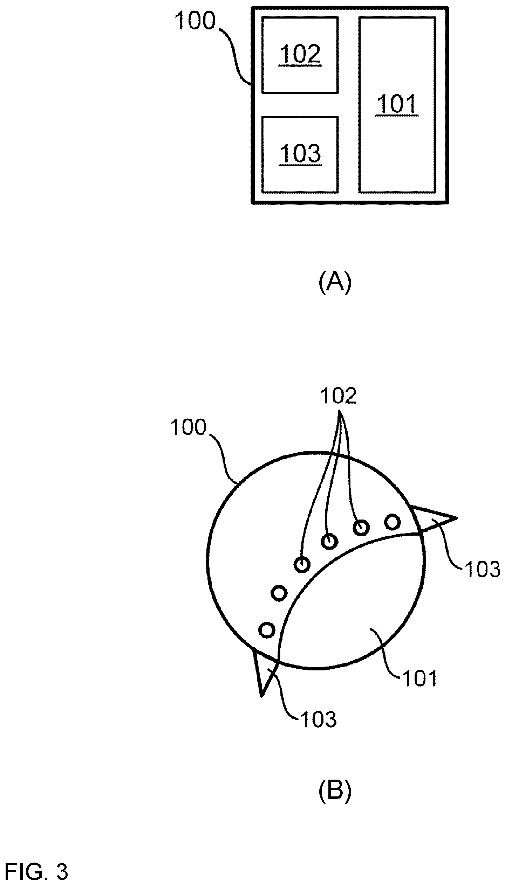

Figur 3(A) zeigt ein Blockschaltbild eines Werkzeugs 100 zur Scheibenreinigung gemäß einer Ausführungsform. Das Werkzeug 100 der erfindungsgemäßen Servicestation 90 weist einen Ultraschallemitter 101 zum Erzeugen einer Ultraschallschwingung auf. Der Ultraschallemitter101 weist bevorzugt ein piezokeramisches Element zur Schwingungserzeugung und gegebenenfalls einen (nicht dargestellten) Schwingkörper auf. Der Ultraschallemitter 101 selbst oder der Schwingkörper sind dazu ausgebildet, direkt oder mittels eines Koppelmediums an eine Fahrzeugscheibe angelegt zu werden, um diese in Schwingung zu versetzen. Das Werkzeug 100 weist ferner ein Mittel 102 zum Aufbringen einer Waschflüssigkeit auf eine Fahrzeugscheibe auf. Das Mittel 102 ist dabei beispielsweise als Sprühkopf oder Auslassöffnung für eine Waschflüssigkeit ausgebildet. Ferner weist das Werkzeug 100 ein Mittel 103 zum Abnehmen der Waschflüssigkeit von einer Fahrzeugscheibe auf, das beispielsweise als ein Schwamm oder ein Abzieher ausgebildet ist. Darüber hinaus kann das Werkzeug 100 weitere (nicht dargestellte) Mittel zum Trocknen und/oder Polieren einer Fahrzeugscheibe aufweisen.

Figur 3(B) zeigt eine schematische Darstellung eines Werkzeugs 100 zur Scheibenreinigung gemäß einer Ausführungsform. Gemäß dieser Ausführungsform ist das Werkzeug 100 im Wesentlichen kugelförmig ausgebildet und wie in Figur 1 schematisch dargestellt dazu ausgebildet, an einem freien Ende eines Roboterarm 951, 952 befestigt zu werden. Bevorzugt ist die Befestigung des kugelförmigen Werkzeugs an dem Roboterarm 951, 952 derart, dass das Werkzeug mittels eines Kugelgelenks in beliebigen Richtungen dreh- beziehungsweise schwenkbar ausgebildet ist. Somit wird das Anlegen an eine Fahrzeugscheibe erleichtert. Das Werkzeug 100 weist ferner einen Ultraschallemitter 101 auf. Der Ultraschallemitter 101 ist als Konstruktionseinheit mit einem Schwingkörper ausgebildet, wobei der Schwingkörper einen Oberflächenabschnitt an einer Vorderseite des kugelförmigen Werkzeugs bildet und mit einen im Inneren des kugelförmigen Werkzeugs 100 angeordneten piezokeramischen Ultraschallwandler in Wirkverbindung steht.

Entlang einer Fuge zwischen dem Schwingkörper und der restlichen Oberfläche des kugelförmigen Werkzeugs sind eine Mehrzahl von Sprühdüsen 102 angeordnet, die dazu ausgebildet sind, eine Waschflüssigkeit auf eine Fahrzeugscheibe aufzusprühen. Die Fuge zwischen dem Schwingkörper und der restlichen Oberfläche des Werkzeugs erstreckt sich im Wesentlichen kreisförmig über die Vorderseite des Werkzeugs 100. Die Sprühdüsen sind dabei wechselnd mit Mitteln 103 zum Abnehmen der Waschflüssigkeit ausgebildet, die gemäß Figur 3(B) als Abzieher in Form von Gummilippen ausgebildet sind. Somit können durch Drehung des Werkzeugs 100 um das die Verbindung zum Roboterarm 951, 952 herstellenden Kugelgelenk entweder die Sprühdüsen 102 oder die Gummilippen 103 ober- und unterhalb des Schwingkörpers angeordnet beziehungsweise an die Fahrzeugscheibe angelegt werden.

Im Betrieb des Werkzeugs 100 werden bevorzugt zunächst die Sprühdüsen 102 ober- und unterhalb des Schwingkörpers an die Fahrzeugscheibe angelegt. Durch Bewegen des Werkzeugs 100 entlang der Fahrzeugscheibe wird die Waschflüssigkeit auf der vibrierenden Fahrzeugscheibe verteilt. Nachdem die Waschflüssigkeit auf der Fahrzeugscheibe verteilt ist, wird das Werkzeug 100 um 90° rotiert, sodass die Gummilippen 103 ober- und unterhalb des Schwingkörpers angeordnet sind. Anschließend kann durch Auf- und Abwärtsbewegen des Werkzeugs 100 die Waschflüssigkeit mit darin gelösten Verschmutzungen von der noch immer vibrierenden Fahrzeugscheibe abgenommen werden. Die Vibration unterstützt dabei das Ablösen der Verschmutzungen als auch das Abnehmen der Waschflüssigkeit von der Scheibe.

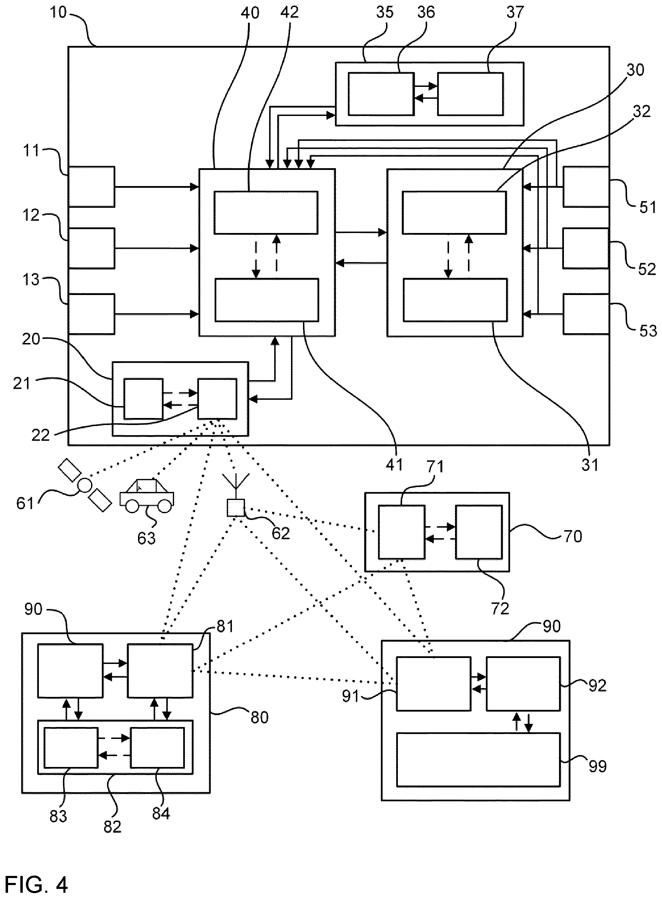

Figur 4 zeigt eine schematische Darstellung eines Systems zur Durchführung einer Serviceaktion an dem Kraftfahrzeug 10, insbesondere zum Aufbringen und/oder Entfernen von zumindest einlagigen Überzügen 104, 105, 106 auf Elementen eines Fahrzeuginnenraums. Das System weist ein autonomes Fahrzeug 10, einen Server 70, eine Servicestation 80 und ein Servicemodul 90, insbesondere wie mit Bezug zu den Figuren 1 bis 3 beschrieben, auf.

Figur 4 zeigt ein zweispuriges Fahrzeug 10 mit Elektromotor 37, das eine Vielzahl erster Sensoren, insbesondere einen ersten Sensor 11, einen zweiten Sensor 12, und einen dritten Sensor 13 aufweist. Die ersten Sensoren 11, 12, 13 sind zum Erfassen von Umgebungsdaten des Fahrzeugs 10 eingerichtet und umfassen beispielsweise Temperatursensoren zum Erfassen einer Umgebungstemperatur, eine Kamera zum Erfassen eines Bildes einer das Fahrzeug 10 unmittelbar umgebenden Umwelt, ein Mikrofon zum Erfassen von Geräuschen einer das Fahrzeug 10 unmittelbar umgebenden Umwelt, Abstandssensoren wie beispielsweise Ultraschallsensoren zum Erfassen von Abständen zu das Fahrzeug 10 umgebenden Objekten.

Die ersten Sensoren 11, 12, 13 übertragen die von ihnen erfassten Umgebungssignale an eine erste Steuereinheit 40 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren 51, 52, 53 handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen.

Darüber hinaus sind zumindest einige der zweiten Sensoren 51, 52, 53 zum Erfassen eines Verschmutzungsgrads des Fahrzeugs 10 ausgebildet. Die dafür ausgebildeten zweiten Sensoren 51, 52, 53 umfassen beispielsweise eine Innenraumkamera zum Erfassen von Bildsignalen des Fahrzeuginnenraums, eine Dashboard-Kamera zum Erfassen von Bildsignalen der Motorhaube, eine Kamera in einem Seitenspiegel zum Erfassen von Bildsignalen einer Seitentür des Fahrzeugs und anderweitige Sensoren zum Erfassen einer Verschmutzung, beispielsweise anhand eines Reflexiongrades des Fahrzeuglacks oder dergleichen. Die zweiten Sensoren 51, 52, 53 übermitteln die von ihnen erfassten Zustandssignale an die erste Steuereinheit 40 des Fahrzeugs 10. Darüber hinaus übermitteln zumindest einige der zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Ebenfalls bevorzugt ist der Transponder 22 zur Kommunikation via Mobilfunknetz, beispielsweise ein LTE, LTE-A oder 5G Mobilfunknetz ausgebildet. Der Transponder 22 kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70, insbesondere einem vierten Kommunikationsmodul 71 des Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet, mit einem zweiten Kommunikationsmodul 81, einer Servicestation 80 und mit einem dritten Kommunikationsmodul 91 eines Servicemoduls 90 zu kommunizieren. Das erste Kommunikationsmodul 20 ist ferner dazu eingerichtet, mit einem (vierten) Kommunikationsmodul eines Reinigungsroboters 100 zu kommunizieren. Die Kommunikation erfolgt bevorzugt direkt über eine V2X Kommunikation oder über ein Mobilfunknetz. Die Kommunikation über das Mobilfunknetz erfolgt über ein oder mehrere Basisstationen 62.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Fahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Zumindest ein Teil der zweiten Sensoren 51, 52, 53, des Fahrzeugs 10 übermittelt seine Messergebnisse direkt an das Fahrsystem 30. Bei diesen unmittelbar an das Fahrsystem übermittelten Daten handelt es sich insbesondere um aktuelle Lage- und Bewegungsinformationen des Fahrzeugs 10. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug 10 kann es sich darüber hinaus um ein Hybridfahrzeug handeln, welches einen Wasserstofftank zum Versorgen eines im Fahrzeug 10 angeordneten Brennstoffzellensystems aufweist.

Das Fahrzeug 10 weist ferner eine erste Steuereinheit 40 auf, welche zum Durchführen von Verfahrensschritten des Fahrzeugs zum Durchführen einer Serviceaktion eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Das System zum Durchführen des erfindungsgemäßen Verfahrens weist ferner bevorzugt einen Server 70 auf. Der Server 70 wird bevorzugt von einem Flottenbetreiber einer autonomen Fahrzeugflotte, beispielsweise im Rahmen eines Carsharing-Konzepts, von einem Serviceanbieter für Fahrzeugreinigungen und/oder von einem Fahrzeughersteller betrieben. Der Server 70 weist ein viertes Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine vierte Steuereinheit 72 auf. Das System zum Durchführen einer Serviceaktion weist ferner eine Servicestation 80 und zumindest ein Servicemodul 90 auf.

Die Servicestation 80 weist ein zweites Kommunikationsmodul 81 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem dritten Kommunikationsmodul 91 eines Servicemoduls 90 ausgebildet ist. Insbesondere ist das zweite Kommunikationsmodul 81 zur Kommunikation mit dem gleichen Protokoll wie das erste Kommunikationsmodul 20 des Fahrzeugs 10, wie das vierte Kommunikationsmodul 71 des Servers 70 und wie das dritte Kommunikationsmodul 91 des Servicemoduls 90 eingerichtet.

Darüber hinaus weist die Servicestation 80 eine Steuereinheit 82 auf, welche einen Speicher 83 und eine CPU 84 aufweist, die über einen geeigneten Datenbus, beispielsweise einen CAN-Bus oder SPI-Bus, miteinander kommunizieren. Die Servicestation 80 weist ferner zumindest ein Servicemodul 90, bevorzugt mehrere Servicemodule 90, auf. Die Komponenten des Servicemoduls 90 gleichen denen des im Folgenden erläuterten Servicemoduls 90. Die Servicestation 80 weist somit zumindest ein Servicemodul 90 auf und/oder ist mit zumindest einem eigenständigen Servicemodul 90 assoziiert.

Jedes der Servicemodule 90 ist zur Kommunikation mit der zweiten Steuereinheit 82 ausgebildet. Die zweite Steuereinheit 82 ist dazu ausgebildet, in Kommunikation mit dem zweiten Kommunikationsmodul 81 und dem zumindest einen Servicemodul 90 die von der Servicestation 80 durchgeführten Schritte des erfindungsgemäßen Verfahrens durchzuführen.

Die zweite Steuereinheit 82 ist insbesondere dazu ausgebildet, die Schritte der erfindungsgemäßen Servicestation 80 durchzuführen.

Das erfindungsgemäße System weist zumindest ein Servicemodul 90 auf. Das Servicemodul 90 weist ein drittes Kommunikationsmodul 91 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem zweiten Kommunikationsmodul 81 der Servicestation 80 ausgebildet ist. Insbesondere ist das dritte Kommunikationsmodul 91 zur Kommunikation mit dem gleichen Protokoll wie das erste Kommunikationsmodul 20 des Fahrzeugs 10, das vierte Kommunikationsmodul 71 des Servers 70 und das zweite Kommunikationsmodul 81 der Servicestation 80 eingerichtet.

Darüber hinaus weist das Servicemodul 90 eine dritte Steuereinheit 92 auf, welche beispielsweise einen Speicher und eine CPU aufweist, die über einen geeigneten Datenbus, beispielsweise einen CAN-Bus oder SPI-Bus, miteinander kommunizieren.

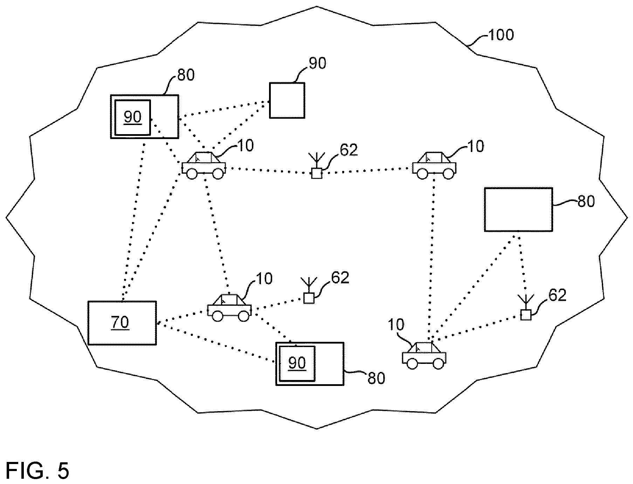

Figur 5 zeigt eine schematische Darstellung eines Betriebsbereichs 100 zur Durchführung der erfindungsgemäßen Verfahren unter Verwendung des in Figur 4 dargestellten Systems. Der Betriebsbereich 100 erstreckt sich bevorzugt über ein urbanes Ballungsgebiet, beispielsweise eine Stadt oder ein Stadtzentrum. Innerhalb des Betriebsbereichs 100 befindet sich eine Vielzahl autonomer Fahrzeuge 10, von denen jedes eine grundlegende Konfiguration, wie mit Bezug zu Figur 4 erläutert, aufweist. Jedes der autonomen Fahrzeuge 10 ist dabei von Nutzern eines Carsharing-Dienstes abrufbar oder aber einem bestimmten Nutzer dauerhaft zugeordnet.

Der Betriebsbereich 100 weist eine Vielzahl von Servicestationen 80 und Servicemodulen 90 auf. Ferner ist ein Server 70 im Betriebsbereich 100 angeordnet. Die autonomen Fahrzeuge 10 sind zur Kommunikation untereinander, insbesondere mittels der ersten Kommunikationsmodule 20 und via Basisstationen 62 eines Mobilfunknetzes, ausgebildet. Die Fahrzeuge 10 sind ferner zur Kommunikation mit den Servicestationen 80, den Servicemodulen 90 und dem Server 70 ausgebildet. Die Kommunikation erfolgt dabei direkt zwischen diesen Elementen oder über Basisstationen 62 eines Mobilfunknetzes. Darüber hinaus sind auch die anderen Komponenten des in der Figur 5 dargestellten Systems zur direkten oder indirekten Kommunikation miteinander ausgebildet, wie beispielsweise eine Servicestation 80 mit dem Server 70 und Servicemodulen 90 und der Server 70 mit den Servicemodulen 90. Verbindungen sind in Figur 5 mit den gestrichelten Linien angedeutet.

### Bezugszeichenliste

- 10: Kraftfahrzeug
- 11: erster Sensoren
- 12: zweiter Sensor
- 13: dritter Sensor
- 18: Fahrzeugtür

- 20: erstes Kommunikationsmodul
- 21: Speicher
- 22: Transponder

- 30: Fahrsystem
- 31: Speicher
- 32: CPU
- 35: elektrisches Fahrsystem
- 36: elektrischer Energiespeicher
- 37: Elektromotor

- 40: erste Steuereinheit
- 41: Speicher
- 42: CPU

- 51: vierter Sensor
- 52: fünfter Sensor
- 53: sechster Sensor

- 61: GPS Satellit
- 62: Mobilfunkstation
- 63: anderes Fahrzeug

- 70: Server
- 71: viertes Kommunikationsmodul
- 72: vierte Steuereinheit
- 80: Servicestation
- 81: zweites Kommunikationsmodul
- 83: Speicher
- 84: CPU

- 90: Servicemodul
- 91: drittes Kommunikationsmodul
- 92: dritte Steuereinheit
- 99: Mittel zum Durchführen einer Serviceaktion
- 95: erstes Servicemodul

- 951: Reinigungsroboter
- 952: Reinigungsroboter
- 953: Halteposition

- 100: Werkzeug zur Scheibenreinigung
- 101: Ultraschallemitter
- 102: Mittel zum Auftragen einer Waschflüssigkeit
- 103: Mittel zum Abnehmen einer Waschflüssigkeit

## Patentansprüche

1. Servicestation (90) für die Fahrzeuge (10) einer autonomen Fahrzeugflotte, aufweisend zumindest ein zum autonomen Durchführen einer Scheibenreinigung an dem Fahrzeug (10) ausgebildetes Servicemodul (95) mit zumindest einem Roboterarm (951, 952), wobei an dem Roboterarm (951, 952) ein Werkzeug (100) zur Scheibenreinigung angeordnet ist, das zumindest ein Mittel zum Auftragen einer Waschflüssigkeit (101) und zumindest ein Mittel zum Abnehmen einer Waschflüssigkeit (103) aufweist, **dadurch gekennzeichnet, dass** das Werkzeug (100) einen Ultraschallemitter (101) aufweist, wobei der Roboterarm (951, 952) dazu ausgebildet ist, den Ultraschallemitter (101) an eine Fahrzeugscheibe des Fahrzeugs (10) anzulegen.

2. Servicestation (90) nach Anspruch 1, **dadurch gekennzeichnet, dass** der Ultraschallemitter (101) dazu ausgebildet ist, eine Fahrzeugscheibe des Fahrzeugs (10) in Schwingung zu versetzen.

3. Servicestation (90) nach einem der vorangehenden Ansprüche, **dadurch gekennzeichnet, dass** die Mittel zum Auftragen einer Waschflüssigkeit zumindest einen Tank für eine Waschflüssigkeit und zumindest eine Sprühdüse (102) aufweisen.

4. Servicestation (90) nach einem der vorangehenden Ansprüche, ferner aufweisend:
ein für die Kommunikation mit den Fahrzeugen (10) und/oder einem Server (70) eines Flottenbetreibers eingerichtetes Kommunikationsmodul (91); und
eine zum Ermitteln einer an einem Fahrzeug (10) durchzuführenden Scheibenreinigung, zur Steuerung des Roboterarms (951, 952) und/oder zur Steuerung des Werkzeugs (100) eingerichtete Steuereinheit (92).

5. Servicestation (90) nach Anspruch 4, wobei die Steuereinheit (92) dafür eingerichtet ist, eine an dem Fahrzeug (10) durchzuführende Scheibenreinigung anhand vom Fahrzeug (10) oder vom Server (70) empfangener Informationen zu ermitteln.

6. Servicestation (90) nach einem der vorangehenden Ansprüche, ferner aufweisend
ein dem Servicemodul (95) vorgelagertes erstes Kontrollmodul mit zumindest einem ersten Sensor, der zum Erfassen eines Verschmutzungsgrads zumindest einer Fahrzeugscheibe ausgebildet ist, und/oder
ein dem Servicemodul (95) nachgelagertes zweites Kontrollmodul mit zumindest einem zweiten Sensor, der zum Erfassen eines Verschmutzungsgrads zumindest einer Fahrzeugscheibe ausgebildet ist.

7. Verfahren einer Servicestation (90) nach einem der Ansprüche 1 bis 6 zur autonomen Reinigung zumindest einer Fahrzeugscheibe eines Fahrzeugs (10), das Verfahren aufweisend die Schritte:
Ermitteln von Informationen zu einem Verschmutzungsgrad der Fahrzeugscheibe;
Ermitteln einer an dem Fahrzeug (10) durchzuführenden Scheibenreinigung anhand der Informationen zum Verschmutzungsgrad der Fahrzeugscheibe und zumindest eines für die durchzuführende Scheibenreinigung verfügbaren Servicemoduls (95);
Durchführen der ermittelten Scheibenreinigung mittels eines verfügbaren Servicemoduls (95),
wobei das Durchführen der Scheibenreinigung die folgenden Verfahrensschritte aufweist:
Ankoppeln eines Ultraschallemitters (101) eines Werkzeugs (100) zur Scheibenreinigung an die Fahrzeugscheibe;
Versetzen der Fahrzeugscheibe in Schwingung; und
Reinigung der schwingenden Fahrzeugscheibe mit einer Waschflüssigkeit mittels zumindest einem Mittel (101) zum Auftragen der Waschflüssigkeit und zumindest einem Mittel (103) zum Abnehmen der Waschflüssigkeit.

8. Verfahren nach Anspruch 7, wobei die Informationen zu einem Verschmutzungsgrad der Fahrzeugscheibe von dem Fahrzeug (10) erfasste erste Informationen, auf einer Nutzereingabe basierende zweite Informationen und/oder von dem Server (70) bereitgestellte dritte Informationen aufweisen.

9. Verfahren nach Anspruch 7 oder 8 einer Servicestation (90) gemäß Anspruch 6, ferner aufweisend die Verfahrensschritte:
Erfassen von ersten Kontrollinformationen zu einem Verschmutzungsgrad der Fahrzeugscheibe mittels des ersten Kontrollmoduls;
Ermitteln der am Fahrzeug durchzuführenden Scheibenreinigung anhand der Informationen zum Verschmutzungsgrad der Fahrzeugscheibe und der ersten Kontrollinformationen zum Verschmutzungsgrad der Fahrzeugscheibe;
Erfassen von zweiten Kontrollinformationen zu einem Verschmutzungsgrad der Fahrzeugscheibe mittels des zweiten Kontrollmoduls.

## Claims

1. Service station (90) for the vehicles (10) of a fleet of autonomous vehicles, having at least one service module (95), which is designed for autonomously carrying out window cleaning on the vehicle (10) and has at least one robot arm (951, 952), wherein a window cleaning tool (100), which has at least one means for applying a washing fluid (101) and at least one means for removing a washing fluid (103), is arranged on the robot arm (951, 952),
**characterized in that** the tool (100) has an ultrasound emitter (101), wherein the robot arm (951, 952) is designed to place the ultrasound emitter (101) against a vehicle window of the vehicle (10).

2. Service station (90) according to Claim 1, **characterized in that** the ultrasound emitter (101) is designed to make a vehicle window of the vehicle (10) vibrate.

3. Service station (90) according to either of the preceding claims, **characterized in that** the means for applying a washing fluid have at least one tank for a washing fluid and at least one spray nozzle (102).

4. Service station (90) according to one of the preceding claims, also having:
a communication module (91), designed for communication with the vehicles (10) and/or a server (70) of a fleet operator; and
a control unit (92), designed for determining window cleaning to be carried out on a vehicle (10), for controlling the robot arm (951, 952) and/or for controlling the tool (100).

5. Service station (90) according to Claim 4, wherein the control unit (92) is designed for determining window cleaning to be carried out on the vehicle (10) on the basis of information received by the vehicle (10) or by the server (70).

6. Service station (90) according to one of the preceding claims, also having a first monitoring module, which is arranged in front of the service module (95) and has at least a first sensor, which is designed for sensing a degree of soiling of at least one vehicle window, and/or
a second monitoring module, which is arranged behind the service module (95) and has at least a second sensor, which is designed for sensing a degree of soiling of at least one vehicle window.

7. Method of a service station (90) according to one of Claims 1 to 6 for autonomously cleaning at least one vehicle window of a vehicle (10), the method comprising the steps of:
determining information in relation to a degree of soiling of the vehicle window;
determining window cleaning to be carried out on the vehicle (10) on the basis of the information in relation to the degree of soiling of the vehicle window and at least one service module (95) available for the window cleaning to be carried out;
carrying out the determined window cleaning by means of an available service module (95),
wherein the carrying out of the window cleaning comprises the following method steps:
coupling an ultrasound emitter (101) of a window cleaning tool (100) to the vehicle window;
making the vehicle window vibrate; and
cleaning the vibrating vehicle window with a washing fluid by means of at least one means (101) for applying the washing fluid and at least one means (103) for removing the washing fluid.

8. Method according to Claim 7, wherein the information relating to a degree of soiling of the vehicle window comprises first information, sensed by the vehicle (10), second information, based on a user input, and/or third information, provided by the server (70) .

9. Method according to Claim 7 or 8 of a service station (90) according to Claim 6, also comprising the method steps of:
sensing first monitoring information in relation to a degree of soiling of the vehicle window by means of the first monitoring module;
determining the window cleaning to be carried out on the vehicle on the basis of the information in relation to the degree of soiling of the vehicle window and the first monitoring information in relation to the degree of soiling of the vehicle window;
sensing second monitoring information in relation to a degree of soiling of the vehicle window by means of the second monitoring module.

## Revendications

1. Station de service (90) destinée aux véhicules (10) d'une flotte de véhicules autonomes, présentant au moins un module de service (95) réalisé pour l'exécution autonome d'un nettoyage de vitre sur le véhicule (10) et doté d'au moins un bras de robot (951, 952), sur le bras de robot (951, 952) étant disposé un outil (100) servant au nettoyage de vitre et présentant au moins un moyen pour appliquer un liquide de lavage (101) et au moins un moyen pour retirer un liquide de lavage (103),
**caractérisée en ce que** l'outil (100) présente un émetteur d'ultrasons (101), le bras de robot (951, 952) étant réalisé pour appliquer l'émetteur d'ultrasons (101) à une vitre de véhicule du véhicule (10).

2. Station de service (90) selon la revendication 1, **caractérisée en ce que** l'émetteur d'ultrasons (101) est réalisé pour faire osciller une vitre de véhicule du véhicule (10).

3. Station de service (90) selon l'une quelconque des revendications précédentes, **caractérisée en ce que** les moyens pour appliquer un liquide de lavage présentent au moins un réservoir pour un liquide de lavage et au moins une buse de pulvérisation (102).

4. Station de service (90) selon l'une quelconque des revendications précédentes, présentant en outre :
un module de communication (91) aménagé pour la communication avec les véhicules (10) et/ou un serveur (70) d'un opérateur de flotte ; et
une unité de commande (92) aménagée pour déterminer un nettoyage de vitre à effectuer sur un véhicule (10), pour commander le bras de robot (951, 952) et/ou pour commander l'outil (100).

5. Station de service (90) selon la revendication 4, dans laquelle l'unité de commande (92) est aménagée pour déterminer un nettoyage de vitre à effectuer sur le véhicule (10) à l'aide d'informations reçues du véhicule (10) ou du serveur (70).

6. Station de service (90) selon l'une quelconque des revendications précédentes, présentant en outre
un premier module de contrôle placé en amont du module de service (95) et doté d'au moins un premier capteur qui est réalisé pour détecter un degré de salissure d'au moins une vitre de véhicule, et/ou
un deuxième module de contrôle placé en aval du module de service (95) et doté d'au moins un deuxième capteur qui est réalisé pour détecter un degré de salissure d'au moins une vitre de véhicule.

7. Procédé d'une station de service (90) selon l'une quelconque des revendications 1 à 6 pour le nettoyage autonome d'au moins une vitre de véhicule d'un véhicule (10), le procédé présentant les étapes consistant à :
déterminer des informations concernant un degré de salissure de la vitre de véhicule ;
déterminer un nettoyage de vitre à effectuer sur le véhicule (10) à l'aide des informations concernant le degré de salissure de la vitre de véhicule et au moins d'un module de service (95) disponible pour le nettoyage de vitre à effectuer ;
effectuer le nettoyage de vitre déterminé au moyen d'un module de service (95) disponible,
l'exécution du nettoyage de vitre présentant les étapes de procédé suivantes consistant à :
coupler un émetteur d'ultrasons (101) d'un outil (100) servant au nettoyage de vitre avec la vitre de véhicule ;
faire osciller la vitre de véhicule ; et
nettoyer la vitre de véhicule oscillante avec un liquide de lavage à l'aide d'au moins un moyen (101) pour appliquer le liquide de lavage et d'au moins un moyen (103) pour retirer le liquide de lavage.

8. Procédé selon la revendication 7, dans lequel les informations concernant un degré de salissure de la vitre de véhicule présentent des premières informations détectées par le véhicule (10), des deuxièmes informations basées sur une entrée utilisateur et/ou des troisièmes informations fournies par le serveur (70) .

9. Procédé selon la revendication 7 ou 8 d'une station de service (90) selon la revendication 6, présentant en outre les étapes de procédé consistant à :
détecter des premières informations de contrôle concernant un degré de salissure de la vitre de véhicule au moyen du premier module de contrôle ;
déterminer le nettoyage de vitre à effectuer sur le véhicule à l'aide des informations concernant le degré de salissure de la vitre de véhicule et des premières informations de contrôle concernant le degré de salissure de la vitre de véhicule ;
détecter des deuxièmes informations de contrôle concernant un degré de salissure de la vitre de véhicule au moyen du deuxième module de contrôle.
